# EUROPÄISCHE PATENTSCHRIFT

(11) **EP 3 024 861 B1**
(45) Veröffentlichungstag und Bekanntmachung des Hinweises auf die Patenterteilung: **10.02.2021**
(21) Anmeldenummer: 14744095.2
(22) Anmeldetag: 25.07.2014
(51) Int. Cl.: C08G 18/00, C08G 18/76, C08G 18/48, C08G 18/18, C08G 18/20, C08G 101/00, C08J 9/00, C08L 63/00

(54) **ISOCYANAT-EPOXY-SCHAUMSYSTEM**
FOAM SYSTEM BASED ON ISOCYANATES AND EPOXIDES
SYSTÈME DE MOUSSE À PARTIR D'ISOCYANATES ET D'ÉPOXYDES

(30) Priorität: 26.07.2013 EP 13178203
(43) Veröffentlichungstag der Anmeldung: 01.06.2016
(73) Patentinhaber: BASF SE, 67056 Ludwigshafen am Rhein (DE)
(72) Erfinder: PRISSOK, Frank, 49448 Lemförde (DE); KAMM, Andre, 49163 Bohmte (DE); HARMS, Michael, 49356 Diepholz (DE)
(74) Vertreter: BASF IP Association
(86) Internationale Anmeldenummer: PCT/EP2014/066044
(87) Internationale Veröffentlichungsnummer: WO 2015/011269

(56) Entgegenhaltungen:
- DE-A1- 2 601 927
- FR-A- 1 441 565
- US-A- 5 530 035

## Beschreibung

Die vorliegende Erfindung betrifft ein Verfahren zur Herstellung eines Hartschaums umfassend die Umsetzung mindestens eines Polyisocyanats mit einer Mischung enthaltend mindestens ein Polyepoxid, Wasser und mindestens eine weitere wasserstoffazide Verbindung, wobei die Umsetzung in Gegenwart einer metallfreien Lewisbase mit mindestens einem Stickstoffatom erfolgt, Hartschäume erhältlich nach einem derartigen Verfahren, sowie die Verwendung eines erfindungsgemäßen Hartschaums zur Herstellung von Dämmmaterialien, Vakuumisolationspaneelen, Kühlgeräten, Bauelementen, Windrotorblättern oder Elementen für den Boots- und Fahrzeugbau.

Schäume aus Isocyanaten mit wasserstoffaziden Verbindungen wie Alkoholen oder Aminen sind lange bekannt und in der Literatur beschrieben. Durch Mischung geeigneter Verbindungen gelangt man zu Schäumen auf der Basis von Polyurethanen, Polyharnstoffen, Polyisocyanuraten oder Mischungen dieser.

Epoxidschäume sind ebenfalls in der Literatur bekannt, zeigen jedoch den Nachteil, dass keine geringen Dichten im Bereich von kleiner 150 g/l, wie sie für Polyurethan-Schäume üblich sind, erreicht werden und die Verarbeitungszeit im Vergleich zu Polyurethan-Schäumen sehr lang ist, d.h. beispielsweise größer als 1 Stunde bei 10 mm Dicke. Die Schäume zeigen allerdings eine sehr gute Haftung zu Epoxid-Deckschichten, eine hohe Steifigkeit und gute Beständigkeit.

Eine Reihe von Patenten beschäftigte sich mit der Herstellung, Verarbeitung und Nutzung von Kombinationen aus Isocyanaten und Epoxiden. Der Einsatz dieser Stoffklasse ist für technische Anwendungen schwierig, da einfache Mischungen von Isocyanaten und Epoxiden auch bei erhöhten Temperaturen kaum zur Reaktion zur bringen sind. Aus der Literatur ist bekannt, dass sich bei höheren Temperaturen, insbesondere bei Temperaturen über 120 ° C, nach längerer Zeit Oxazolidone bilden können. Eine Konkurrenzreaktion ist die Bildung von Polyisocyanuraten (PIR) aus den Isocyanaten.

So beschreibt US 4,699,931 ein Verfahren zur Herstellung von Oxazolidon modifizierten Polyisocyanurat Schaumstoffen, bei denen Polyepoxide und Polyisocyanate mit aminischen PIR-Katalysatoren und Treibmitteln zur Reaktion gebracht werden, um entsprechende Schaumstoffe zu erzeugen. Dabei offenbart US 4,699,931, dass die Reaktion äußerst schnell abläuft, beispielsweise mit einer Startzeit von weniger als 20 Sekunden.

EP 0 130 454 A2 offenbart ein Verfahren zur Herstellung von kompakten Reaktionsharzen auf Basis von Isocyanaten und Epoxiden. Ferner lehrt EP 0 130 454 A2, dass der Einsatz von Aminkatalysatoren bereits bei niedrigen Temperaturen zu kurzen Topfzeiten führt. Die in EP 0 130 454 A2 offenbarten Harzsysteme besitzen den Nachteil, dass diese bei hohen Temperaturen gehärtet werden müssen.

FR 1 441 565 A offenbart die Herstellung von dimensionsstabilen Polyurethanhartschäumen, umfassend die Umsetzung eines Polyisocyanat-Prepolymeren mit einer Mischung umfassend ein Diepoxid, ein Polyol, beispielsweise Butandiol oder ein Polyesterpolyol, und Wasser in Gegenwart von tertiären Aminen wie beispielsweise1,3,5-Tris(dimethylaminopropyl)hexahydrotriazin oder N-Methylmorpholin.

US 5,530,035 offenbart geschlossenzellige Polyurethan-Isolationsschäume, die hergestellt werden durch Umsetzung von Toluylendiisocyanat und einer Mischung aus Wasser, Polyepoxid, Polyetherpolyol und auch Polyetherpolyamin in Gegenwart von 1,1-Dichloro-1-fluoroethan und einem tertiären Amin.

DE 36 00 764 A1 beschreibt den Einsatz von tertiären oder quaternären Ammoniumsalzen als Katalysatoren, um Systeme mit langer offener Zeit zu erhalten. Nachteilig bei dem in DE 36 00 764 A1 offenbarten Verfahren ist, dass die Härtung bei hohen Temperaturen erfolgt. Ebenso offenbart DE 36 00 764 A1, dass durch tertiäre Amine nur eine offene Zeit von kleiner 20 Minuten erreicht werden kann. Diese Zeiten bzw. Verarbeitungsbedingungen sind für größere Bauteile und großtechnische Anwendungen nicht ausreichend.

Ein Schaumstoff basierend auf Epoxiden und Isocyanaten ist der Literatur so nicht zu entnehmen.

Ausgehend vom Stand der Technik lag damit eine der vorliegenden Erfindung zugrunde liegende Aufgabe darin, Verfahren zur Herstellung von Hartschäumen auf Basis von Isocyanaten und Epoxiden bereitzustellen, die für technische Anwendungen geeignet sind, bzw. geeignete Hartschaumsysteme. Dabei sollte die Verarbeitungszeit ausreichend lang sein, und die Hartschäume gleichzeitig eine ausreichende Festigkeit und gute Beständigkeit aufweisen.

Erfindungsgemäß wird diese Aufgabe gelöst durch ein Verfahren zur Herstellung eines Hartschaums umfassend die Umsetzung mindestens eines Polyisocyanats mit einer Mischung enthaltend mindestens ein Polyepoxid, Wasser und mindestens eine weitere wasserstoffazide Verbindung, wobei die Umsetzung in Gegenwart einer metallfreien Lewisbase mit mindestens einem Stickstoffatom erfolgt, wobei der Katalysator ausgewählt ist aus der Gruppe bestehend aus 1,8-Diazabicyclo-5,4,0-undec-7-en, N-Methyl-N'-(dimethylaminomethyl)-Piperazin, Pentamethyl-Diethylentriamin, Methylimidazol und deren Mischungen und Derivaten davon.

Bei der weiteren wasserstoffaziden Verbindung kann es sich erfindungsgemäß insbesondere um Polyole und Polyamine handeln. Demgemäß betrifft die vorliegende Erfindung gemäß einer weiteren Ausführungsform ein Verfahren zur Herstellung eines Hartschaums wie zuvor beschrieben, wobei die mindestens eine weitere wasserstoffazide Verbindung ausgewählt ist aus der Gruppe bestehend aus Polyolen und Polyaminen.

Überraschenderweise wurde gefunden, dass in einem Hartschaumsystem ein großer Teil der wasserstoffaziden Verbindung, insbesondere der Polyolkomponente, durch ein Epoxid ausgetauscht werden kann und bei geeigneter Katalyse hiermit Hartschäume erhalten werden, die in ihrem Reaktionsverhalten und der Dichte wassergetriebenen Polyurethan- bzw. Harnstoffschäumen entsprechen.

Derartige Schäume bieten als eine neue Verbindungsklasse die Möglichkeit, klassische Polyurethan- bzw. Polyharnstoffschäume durch Epoxidverbindungen zu modifizieren und durch ein zusätzliches Netzwerk eine erhöhte Festigkeit in die Schäume einzubringen, was zu einer Verbesserung der Druckfestigkeit, der Temperaturbeständigkeit und der chemischen Resistenz führt. Weiterhin ist eine hohe Verträglichkeit zwischen Epoxidharzen und derartigen Schäumen gegeben.

Weiter betrifft die vorliegende Erfindung gemäß einer weiteren Ausführungsform ein Verfahren zur Herstellung eines Hartschaums wie zuvor beschrieben, wobei das Verfahren mindestens die folgenden Schritte umfasst:
(i) Mischen des mindestens einen Polyisocyanats, der Mischung enthaltend mindestens ein Polyepoxid, Wasser und mindestens eine weitere wasserstoffazide Verbindung und des Katalysatorsystems unter Erhalt einer Mischung (I);
(ii) Ausbringen der Mischung (I) in eine Form oder an den gewünschten Reaktionsort durch Gießen, Sprühen oder Verteilen;
(iii) Erwärmen der Mischung (I) auf eine Temperatur im Bereich von 50 bis 100 ° C bis zur Aushärtung der Mischung.

Die Komponenten der Mischung (I) sind erfindungsgemäß niedrigviskos und bei Raumtemperatur flüssig, d.h. die Viskosität ist bei 25 ° C kleiner als 10000 mPas.

Die Mischung (I) kann neben dem mindestens einen Polyisocyanat, der Mischung enthaltend mindestens ein Polyepoxid, Wasser und mindestens eine weitere wasserstoffazide Verbindung und dem Katalysatorsystem weitere Komponenten enthalten, beispielsweise Lösungsmittel, Reaktivverdünner, Stabilisatoren, Verdickungsmittel, Tixotropiermittel, Additive, Haftvermittler, Füllstoffe und insbesondere Treibmittel.

Gemäß einer bevorzugten Ausführungsform betrifft die vorliegende Erfindung demnach ein Verfahren zur Herstellung eines Hartschaums wie zuvor beschrieben, wobei die Mischung (I) ein Treibmittel enthält.

Die erhaltene Mischung (I) wird gemäß Schritt (ii) ausgebracht. Das Ausbringen kann im Rahmen der vorliegenden Erfindung auf jede geeignete Art erfolgen, insbesondere durch Gießen, Sprühen oder Verteilen. Geeignete Methoden sind dem Fachmann an sich bekannt.

Gemäß Schritt (iii) erfolgt dann eine Temperaturbehandlung. Eine vollständige Aushärtung erfolgt erfindungsgemäß erst bei einer Erwärmung, vorzugsweise bei einer Erwärmung auf eine Temperatur von kleiner 100 °C, weiter bevorzugt bei einer Erwärmung auf eine Temperatur im Bereich von 50 bis 100 ° C. Erfindungsgemäß ist es möglich, dass die Erwärmung durch die bei der exothermen Reaktion frei werdende Reaktionswärme erfolgt. Erfindungsgemäß ist es jedoch auch möglich, dass durch geeignete Methoden eine Erwärmung erfolgt.

Demgemäß betrifft die vorliegende Erfindung gemäß einer weiteren Ausführungsform ein Verfahren zur Herstellung eines Hartschaums wie zuvor beschrieben, wobei die Umsetzung bei einer Temperatur von kleiner 100 ° C startet.

Das Erwärmen erfolgt erfindungsgemäß bis zum Aushärten der Mischung. Dabei ist unter Aushärtung der Mischung ein Erreichen von mindestens 20 %, bevorzugt 50 % und besonders bevorzugt 75 % der finalen Härte zu verstehen.

Das Erwärmen kann auf jede dem Fachmann bekannte geeignete Art erfolgen. Vorzugsweise durch elektrisches, Öl oder Wasser Beheizen der Form, Induktionsfelder, Warmluft oder IR-Strahlung auf die Hartschaumoberfläche.

Die Umsetzung des mindestens einen Polyisocyanats und der Mischung enthaltend mindestens ein Polyepoxid, Wasser und mindestens eine weitere wasserstoffazide Verbindung erfolgt erfindungsgemäß in Gegenwart einer metallfreien Lewisbase mit mindestens einem Stickstoffatom als Katalysator, wobei der Katalysator ausgewählt ist aus der Gruppe bestehend aus 1,8-Diazabicyclo-5,4,0-undec-7-en, N-Methyl-N'-(dimethylaminomethyl)-Piperazin, Pentamethyl-Diethylentriamin, Methylimidazol und deren Mischungen und Derivaten davon. Dabei wird der Katalysator in einer geeigneten Menge eingesetzt, um die Reaktion zu katalysieren. Der Katalysator wird beispielsweise in einer Menge im Bereich von 0,0001 bis 3 Gew.-% eingesetzt.

Das Katalysatorsystem wird erfindungsgemäß vorzugsweise in einer Menge von 0,001 bis 2 Gew.-% bezogen auf die Summe des eingesetzten Polyisocyanats und der Mischung enthaltend mindestens ein Polyepoxid, Wasser und mindestens eine weitere wasserstoffazide Verbindung eingesetzt. Vorzugsweise wird das Katalysatorsystem in einer Menge von 0,005 bis 1,5 Gew.-% bezogen auf die Summe des eingesetzten Polyisocyanats und der Mischung enthaltend mindestens ein Polyepoxid, Wasser und mindestens eine weitere wasserstoffazide Verbindung eingesetzt, besonders bevorzugt in einer Menge von 0,01 bis 1,0 Gew.-% bezogen auf die Summe des eingesetzten Polyisocyanats und der Mischung enthaltend mindestens ein Polyepoxid, Wasser und mindestens eine weitere wasserstoffazide Verbindung.

Demgemäß betrifft die vorliegende Erfindung gemäß einer weiteren Ausführungsform ein Verfahren zur Herstellung eines Hartschaums wie zuvor beschrieben, wobei der Katalysator in einer Menge im Bereich von 0,01 bis 2 Gew.-% bezogen auf die Summe des eingesetzten Polyisocyanats und der Mischung enthaltend mindestens ein Polyepoxid, Wasser und mindestens eine weitere wasserstoffazide Verbindung eingesetzt wird.

Erfindungsgemäß wird eine metallfreie Lewisbase mit mindestens einem Stickstoffatom als Katalysator eingesetzt, wobei der Katalysator ausgewählt ist aus der Gruppe bestehend aus 1,8-Diazabicyclo-5,4,0-undec-7-en, N-Methyl-N'-(dimethylaminomethyl)-Piperazin, Pentamethyl-Diethylentriamin, Methylimidazol und deren Mischungen und Derivaten davon. Dabei wird erfindungsgemäß der Katalysator an sich nicht zur Reaktion gebracht. Geeignete metallfreie Lewisbasen mit mindestens einem Stickstoffatom sind dem Fachmann an sich bekannt.

In dem erfindungsgemäßen Verfahren wird ein Katalysatorsystem auf der Basis mindestens einer metallfreien Lewisbase mit mindestens einem Stickstoffatom ausgewählt aus der Gruppe bestehend aus 1,8-Diazabicyclo-5,4,0-undec-7-en, N-Methyl-N'-(dimethylaminomethyl)-Piperazin, Pentamethyl-Diethylentriamin, Methylimidazol und deren Mischungen und Derivaten davon eingesetzt, insbesondere ausgewählt aus der Gruppe bestehend aus 1,8-Diazabicyclo-5,4,0-undec-7-en und Derivaten davon.

Demgemäß betrifft die vorliegende Erfindung ein Verfahren zur Herstellung eines Hartschaums wie zuvor beschrieben, wobei der Katalysator ausgewählt ist aus der Gruppe bestehend aus 1,8-Diazabicyclo-5,4,0-undec-7-en, N-Methyl-N'-(dimethylaminomethyl)-Piperazin, Pentamethyl-Diethylentriamin, Methylimidazol und deren Mischungen und Derivaten davon. Weiter betrifft die vorliegende Erfindung gemäß einer weiteren Ausführungsform ein Verfahren zur Herstellung eines Hartschaums wie zuvor beschrieben, wobei der Katalysator ausgewählt ist aus der Gruppe bestehend aus 1,8-Diazabicyclo-5,4,0-undec-7-en und Derivaten davon.

Bei dem Katalysatorsystem handelt es sich vorzugsweise um ein metallfreies Katalysatorsystem, d.h. es wird kein weiterer metallhaltiger Katalysator eingesetzt. Demgemäß betrifft die vorliegende Erfindung gemäß einer weiteren Ausführungsform ein Verfahren zur Herstellung eines Hartschaums wie zuvor beschrieben, wobei das Katalysatorsystem ein metallfreies Katalysatorsystem ist.

Besonders vorteilhaft ist die metallfreie Lewisbase im Rahmen der vorliegenden Erfindung ein Derivat von 1,8-Diazabicyclo-5,4,0-undec-7-en, besonders bevorzugt ein blockiertes 1,8-Diazabicyclo-5,4,0-undec-7-en, weiter bevorzugt ein Phenol blockiertes 1,8-Diazabicyclo-5,4,0-undec-7-en. Beispielsweise ist die metallfreie Lewisbase ein Derivat von 1,8-Diazabicyclo-5,4,0-undec-7-en oder eine Mischung von 1,8-Diazabicyclo-5,4,0-undec-7-en mit aziden Komponenten, wie z.B. Phenol oder Säuren. Solche Produkte werden unter verschiedenen Handelsnamen wie z.B. Polycat SA 1/10, Toyocat DB 30, Toyocat DB 41, Toyocat DB 42 oder Toyocat DB 60 vertrieben. Besonders bevorzugt wird 1,8-Diazabicyclo-5,4,0-undec-7-en oder ein Phenol blockiertes 1,8-Diazabicyclo-5,4,0-undec-7-en verwendet.

In einer weiteren Ausführungsform der Erfindung kann es vorteilhaft sein, neben dem erfindungsgemäß bevorzugt eingesetzten 1,8-Diazacyclo-5,4,0-undec-7-en als Katalysator noch weitere tertiäre Amine zuzusetzen. Dabei liegt vorzugsweise 1,8-Diazacyclo-5,4,0-undec-7-en im Überschuss vor. Bevorzugte Verhältnisse von 1,8-Diazacyclo-5,4,0-undec-7-en zu anderen tertiären Aminen liegen im Verhältnis von 1:5 bis 5:1, bevorzugt 2:5 bis 5:2.

In dem erfindungsgemäßen Verfahren wird eine Mischung enthaltend mindestens ein Polyepoxid, Wasser und mindestens eine weitere wasserstoffazide Verbindung eingesetzt. Dabei kann das Mischungsverhältnis des mindestens einen Polyepoxids und der mindestens einen weiteren wasserstoffaziden Verbindung in weiten Bereichen variieren, solange gewährleistet ist, dass bei der Umsetzung der Mischung mit dem mindestens einen Polyisocyanat ein Schaum gebildet wird. Dabei wird das das Polyepoxid erfindungsgemäß beispielsweise in einer Menge im Bereich von 5 bis 70 Gew.-%, bezogen auf die Summe des eingesetzten Polyepoxids und der mindestens einen weiteren wasserstoffaziden Verbindung, eingesetzt, bevorzugt in einer Menge im Bereich von 10 bis 60 Gew.-%, bezogen auf die Summe des eingesetzten Polyepoxids und der mindestens einen weiteren wasserstoffaziden Verbindung, weiter bevorzugt im Bereich von 20 bis 60 Gew.-%, bezogen auf die Summe des eingesetzten Polyepoxids und der mindestens einen weiteren wasserstoffaziden Verbindung.

Demgemäß betrifft die vorliegende Erfindung gemäß einer weiteren Ausführungsform ein Verfahren zur Herstellung eines Hartschaums wie zuvor beschrieben, wobei das Polyepoxid in einer Menge im Bereich von 5 bis 70 Gew.-%, bezogen auf die Summe des eingesetzten Polyepoxids und der mindestens einen weiteren wasserstoffaziden Verbindung, eingesetzt wird.

Erfindungsgemäß wird eine Mischung enthaltend mindestens ein Polyepoxid, Wasser und mindestens eine weitere wasserstoffazide Verbindung eingesetzt. Dabei enthält diese Mischung erfindungsgemäß üblicherweise bis zu 5 Gew.-% Wasser, bezogen auf die Summe des eingesetzten Polyepoxids, des Wassers und der mindestens einen weiteren wasserstoffaziden Verbindung, bevorzugt in einer Menge im Bereich von 0,2 bis 4,0 Gew.-%, bezogen auf die Summe des eingesetzten Polyepoxids, des Wassers und der mindestens einen weiteren wasserstoffaziden Verbindung, weiter bevorzugt im Bereich von 1,0 bis 2,5 Gew.-%, bezogen auf die Summe des eingesetzten Polyepoxids, des Wassers und der mindestens einen weiteren wasserstoffaziden Verbindung.

Vorzugsweise ist die mindestens eine weitere wasserstoffazide Verbindung im Rahmen der vorliegenden Erfindung ausgewählt aus der Gruppe bestehend aus Polyolen und Polyaminen. Grundsätzlich sind dem Fachmann geeignete Polyole und Polyamine bekannt. Geeignete Polyole sind beispielsweise beschrieben im "Kunststoffhandbuch, Band 7, Polyurethane", Carl Hanser Verlag, 3. Auflage 1993, Kapitel 3.1. Besonders bevorzugt ist im Rahmen der vorliegenden Erfindung die wasserstoffazide Verbindung ausgewählt aus der Gruppe bestehend aus Polyetherpolyolen, Polyesterpolyolen, Polycarbonatpolyolen und Polyaminen.

Demgemäß betrifft die vorliegende Erfindung gemäß einer weiteren Ausführungsform ein Verfahren zur Herstellung eines Hartschaums wie zuvor beschrieben, wobei die mindestens eine weitere wasserstoffazide Verbindung ausgewählt ist aus der Gruppe bestehend aus Polyetherpolyolen, Polyesterpolyolen, Polycarbonatpolyolen oder Polyaminen.

Die im Rahmen der vorliegenden Erfindung eingesetzten Polyepoxide können beliebige Verbindungen sein. Dabei enthalten die Polyepoxide mindestens eine Epoxidgruppe, bevorzugt allerdings zwei oder mehr Epoxidgruppen. Geeignete Polyepoxide sind dem Fachmann aus der Literatur wie z.B. Handbook of Epoxy Resins (H. Lee, K. Neville, McGraw-Hill Book Company) bekannt. Als Beispiele für monofunktionelle Epoxide seinen z.B. Isoproylglycidether, tert.-Butylglycidether oder Ethylhexylgylcidether genannt. Als besonders geeignet haben sich für das erfindungsgemäße Verfahren Epoxide auf Basis von Epichlorhydrin und Bisphenol-A , Bisphenol-F, Bisphenol-K, Bisphenol S, Biphenol, Hydrochinone, Resorcinol, Tetrabrombisphenol A, Phenol-Formaldehyd Novolac Harze, Polyglycidether, Diglycidylester von z.B. Phthalsäuren oder Terephthalsäuren und Derivate davon und aliphatische Di- oder Tri-Epoxide und Mischungen daraus erwiesen. Solche Produkte werden von verschiedenen Herstellern unter den Handelsnamen Araldite©, D.E.R.©, Epilox© oder Baxxores© vertrieben. Besonders bevorzugt sind Bisphenol-A Epoxide und Derivate davon, insbesondere Glycidylether wie beispielsweise Diglycidylether-Bisphenol-A, und Mischungen mit den oben genannten aliphatischen Di- oder Triepoxiden.

Demgemäß betrifft die vorliegende Erfindung gemäß einer weiteren Ausführungsform ein Verfahren zur Herstellung eines Hartschaums wie zuvor beschrieben, wobei das mindestens eine Polyepoxid ausgewählt ist aus der Gruppe bestehend aus Bisphenol-A-Epoxiden, Bisphenol-F-Epoxiden, Derivaten davon, aliphatischen Di- oder Tri-Epoxiden und Mischungen aus zwei oder mehr davon.

Erfindungsgemäß können auch Mischungen verschiedener Polyepoxide eingesetzt werden.

Erfindungsgemäß kann das Polyepoxid in reiner Form oder in Form einer Zusammensetzung enthaltend das Polyepoxid und mindestens ein Verdünner eingesetzt werden. Geeignete dem Fachmann bekannte Verdünner sind z.B. inreaktive Lösungsmittel wie Ethylacetat, Methylethylketon, Kohlenwasserstoffe, Reaktivverdünner wie lineare, niederviskose Di- oder Triepoxide, Weichmacher wie Phthalate oder Zitronensäureester. Ferner sollen als Verdünner im Rahmen dieser Erfindung auch niederviskose Reaktivverdünner wie z.B. monoglycidether oder Diglycidether auf Basis von kurzkettigen Di- oder Triolen, wie z.B. 1,4-Butandiol, 1,6-Hexandiol, Trimethylolpropan, 1,4 Cyclohexandimethanol oder Polyoxypropylenglycol verstanden werden.

Als Polyisocyanate können aliphatische, cycloaliphatische, araliphatische und/oder aromatische Diisocyanate eingesetzt werden. Im einzelnen seien beispielhaft die folgenden aromatische Isocyanate genannt: 2,4-Toluylen-diisocyanat, Gemische aus 2,4- und 2,6-Toluylen-diisocyanat, 4,4'-, 2,4'- und/oder 2,2'-Diphenylmethan-diisocyanat (MDI), Gemische aus 2,4'- und 4,4'-Diphenylmethan-diisocyanat, urethanmodifizierte flüssige 4,4'- und/oder 2,4-Diphenylmethan-diisocyanate, 4,4'-Diisocyanato-diphenylethan, die Mischungen aus monomeren Methandiphenyldiisocyanaten und höherkernigen Homologen des Methandiphenyldiisocyanats (Polymer-MDI), (1,2) und 1,5-Naphthylen-diisocyanat.

Als aliphatische Diisocyanate werden übliche aliphatische und/oder cycloaliphatische Diisocyanate eingesetzt, beispielsweise Tri-, Tetra-, Penta-, Hexa-, Hepta- und/oder Oktamethylendiisocyanat, 2-Methyl-pentamethylen-diisocyanat-1,5,2-Ethyl-butylen-diisocyanat-1,4,1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat, 4,4'-, 2,4'- und/oder 2,2'-Dicyclohexylmethan-diisocyanat.

Polyisocyanatprepolymere sind erhältlich, indem vorstehend beschriebene Polyisocyanate im Überschuss, beispielsweise bei Temperaturen von 30 bis 100 °C, bevorzugt bei etwa 80 °C, mit Polyolen zum Prepolymer umgesetzt werden. Vorzugsweise wird zur Herstellung der erfindungsgemäß eisetzbaren Prepolymere Polyisocyanate und handelsüblichen Polyolen auf Basis von Polyestern, beispielsweise ausgehend von Adipinsäure, oder Polyethern, beispielsweise ausgehend von Ethylenoxid und/oder Propylenoxid, verwendet.

Polyole sind dem Fachmann bekannt und beispielsweise beschrieben im "Kunststoffhandbuch, Band 7, Polyurethane", Carl Hanser Verlag, 3. Auflage 1993, Kapitel 3.1. Vorzugsweise werden dabei als Polyole die zuvor beschriebenen polymeren Verbindungen mit gegenüber Isocyanate reaktiven Wasserstoffatomen eingesetzt. Besonders bevorzugt werden als Polyole Polyetherole eingesetzt.

Gegebenenfalls werden den genannten Polyolen bei der Herstellung der Isocyanatprepolymere übliche Kettenverlängerer oder Vernetzungsmittel zugegeben. Solche Substanzen sind dem Fachmann an sich bekannt. Besonders bevorzugt wird als Kettenverlängerer 1,4-Butandiol, Dipropylenglycol und/oder Tripropylenglycol eingesetzt. Vorzugsweise wird dabei das Verhältnis von organischen Polyisocyanaten zu Polyolen und Kettenverlängerern so gewählt, dass das Isocyanatprepolymer einen NCO-Gehalt von 2 bis 30 %, bevorzugt von 6 bis 28 %, besonders bevorzugt von 10 bis 24 % aufweist.

Besonders bevorzugte Polyisocyanate sind ausgewählt aus der Gruppe bestehend aus MDI, Polymer-MDI und TDI, sowie deren Derivate oder Prepolymere dieser Polyisocyanate.

Demgemäß betrifft die vorliegende Erfindung gemäß einer weiteren Ausführungsform ein Verfahren zur Herstellung eines Hartschaums wie zuvor beschrieben, wobei das mindestens eine Polyisocyanat ausgewählt ist aus der Gruppe bestehend aus aromatischen, araliphatischen und aliphatischen Polyisocyanaten. Gemäß einer weiteren Ausführungsform betrifft die vorliegende Erfindung ein Verfahren zur Herstellung eines Hartschaums wie zuvor beschrieben, wobei das mindestens eine Polyisocyanat ein Prepolymer mit einem NCO-Gehalt von 6 bis 30 % ist.

Erfindungsgemäß kann das Polyisocyanat in reiner Form oder in Form einer Zusammensetzung z.B. einem Isocyanatprepolymer verwendet werden. In einer weiteren Ausführungsform kann eine Mischung enthaltend Polyisocyanat und mindestens ein Lösungsmittel oder Verdünnungsmittel eingesetzt werden. Geeignete Lösungsmittel sind dem Fachmann bekannt.

Das Verhältnis bei der Umsetzung von Polyisocyanaten und der Mischung enthaltende mindestens ein Polyepoxid, Wasser und mindestens eine weitere wasserstoffazide Verbindung sollte vorzugweise bei einem Äquivalentverhältnis von Polyisocyanat zur Mischung enthaltend Polyepoxid, Wasser und mindestens eine weitere wasserstoffazide Verbindung im Bereich von beispielsweise 0,25:1 bis 5000:1, besonders bevorzugt 0,35:1 bis 500:1, ganz besonders bevorzugt 0,5:1 bis 100:1 und insbesondere 0,75:1 bis 50:1, weiter bevorzugt im Bereich von 0,8:1 bis 5:1 liegen.

Erfindungsgemäß können übliche Hilfsstoffe hinzugefügt werden. Genannt seien beispielsweise Treibmittel, oberflächenaktive Substanzen, Füllstoffe, weitere Flammschutzmittel, Keimbildungsmittel, Oxidationsstabilisatoren, Gleit- und Entformungshilfen, Farbstoffe und Pigmente, gegebenenfalls Stabilisatoren, z.B. gegen Hydrolyse, Licht, Hitze oder Verfärbung, anorganische und/oder organische Füllstoffe, Verstärkungsmittel und Weichmacher. Geeignete Hilfs- und Zusatzstoffe können beispielsweise dem Kunststoffhandbuch, Band VII, herausgegeben von Vieweg und Höchtlen, Carl Hanser Verlag, München 1966 (S. 103-113) entnommen werden.

Überraschenderweise wurde gefunden, dass eine feuchte Lagerung des ausgehärteten Hartschaums zu einer weiteren Verbesserung der mechanischen Eigenschaften führt. Dieser Effekt kann bereits bei relativ kurzen Lagerungen in einer Wasserdampfatmosphäre erreicht werden. Auch bei Lagerungen in Wasser (Meerwasser, Leitungswasser, entsalzenes Wasser) bei erhöhten Temperaturen (>50 °C) kann dieser Effekt beobachtet werden.

Demgemäß betrifft die vorliegende Erfindung gemäß einer weiteren Ausführungsform ein Verfahren zur Herstellung eines Hartschaums wie zuvor beschrieben, wobei das bei der Umsetzung erhaltene ausreagierte Hartschaum nach der Umsetzung feucht gelagert wird.

Die vorliegende Erfindung betrifft auch die Verwendung einer metallfreien Lewisbase mit mindestens einem Stickstoffatom ausgewählt aus der Gruppe bestehend aus 1,8-Diazabicyclo-5,4,0-undec-7-en, N-Methyl-N'-(dimethylaminomethyl)-Piperazin, Pentamethyl-Diethylentriamin, Methylimidazol und deren Mischungen und Derivaten davon als Katalysator für die Umsetzung mindestens eines Polyisocyanats mit einer Mischung enthaltend mindestens ein Polyepoxid, Wasser und mindestens eine weitere wasserstoffazide Verbindung. Insbesondere betrifft die vorliegende Erfindung die Verwendung von 1,8-Diazabicyclo-5,4,0-undec-7-en und Derivaten davon als Katalysator für die Umsetzung mindestens eines Polyisocyanats mit mindestens einem Polyepoxid, weiter bevorzugt die Verwendung von 1,8-Diazabicyclo-5,4,0-undec-7-en und Derivaten davon als Katalysator für die Umsetzung von Bisphenol-A Epoxide und Derivate davon mit mindestens einem Polyisocyanat.

Weiter betrifft die vorliegende Erfindung auch Hartschäume erhältlich oder erhalten nach einem erfindungsgemäßen Verfahren sowie Formkörper erhältlich aus derartigen Hartschäumen.

Demgemäß betrifft die vorliegende Erfindung auch einen Hartschaum, erhältlich oder erhalten durch ein Verfahren umfassend die Umsetzung mindestens eines Polyisocyanats mit einer Mischung enthaltend mindestens ein Polyepoxid, Wasser und mindestens eine weitere wasserstoffazide Verbindung, wobei die Umsetzung in Gegenwart einer metallfreien Lewisbase mit mindestens einem Stickstoffatom erfolgt, wobei der Katalysator ausgewählt ist aus der Gruppe bestehend aus 1,8-Diazabicyclo-5,4,0-undec-7-en, N-Methyl-N'-(dimethylaminomethyl)-Piperazin, Pentamethyl-Diethylentriamin, Methylimidazol und deren Mischungen und Derivaten davon..

Geeignete wasserstoffazide Verbindungen, Polyepoxide, Polyisocyanate und Katalysatorsystem sind zuvor beschrieben.

So betrifft die vorliegende Erfindung gemäß einer weiteren Ausführungsform einen Hartschaum wie zuvor beschrieben, wobei das Polyepoxid in einer Menge im Bereich von 5 bis 70 Gew.-%, bezogen auf die Summe des eingesetzten Polyepoxids und der mindestens einen weiteren wasserstoffaziden Verbindung, eingesetzt wird.

Gemäß einer weiteren Ausführungsform werden als Polyisocyanate Prepolymere eingesetzt. Durch die Variation des Isocyanatanteils im Prepolymeren können zusätzliche Eigenschaften wie z.B. Härte eingestellt werden, falls keine weiteren Zusatzstoffe wie z.B. Weichmacher verwendet werden.

Demgemäß betrifft die vorliegende Erfindung gemäß einer weiteren Ausführungsform einen Hartschaum wie zuvor beschrieben, wobei das mindestens eine Polyepoxid ausgewählt ist aus der Gruppe bestehend aus Bisphenol-A-Epoxiden, Bisphenol-F-Epoxiden, Derivaten davon, aliphatischen Di- oder Tri-Epoxiden und Mischungen aus zwei oder mehr davon.

Weiter betrifft die vorliegende Erfindung gemäß einer weiteren Ausführungsform einen Hartschaum wie zuvor beschrieben, wobei das mindestens eine Polyisocyanat ausgewählt ist aus der Gruppe bestehend aus aromatischen, araliphatischen und aliphatischen Polyisocyanaten.

Bezüglich morphologischer Eigenschaften wie Geschlossenzelligkeit und Wärmeleitfähigkeit wurde kein Unterschied und keine Verschlechterung gegenüber Vergleichsschäumen ohne Epoxid gefunden; manche mechanischen Eigenschaften der erfindungsgemäßen Schäume sind gegenüber vergleichbaren Schäumen ohne Zusatz von Epoxiden ähnlich, andere erfahren eine deutlich Verbesserung, wie beispielsweise Druckfestigkeit und 3-Punktbiegefestigkeit, sowie Zugfestigkeit.

Die erfindungsgemäßen Hartschäume weisen eine gute Temperaturbeständigkeit, gute Resistenz gegenüber Umwelteinflüssen und Chemikalien und eine gute Haftung bzw. Verträglichkeit mit Epoxidharzen auf.

Als Einsatzgebiet für die erfindungsgemäßen Schäume kommen neben den üblichen Polyurethanhartschaum-, Halbhartschaum- und Duromerschaum-Anwendungen wie Dämmung, Fernwärme, Sandwichelementen, Bauanwendungen, Trittschalldämmung , Kühlgeräten, LKW-Aufbauten und Konstruktionswerkstoffen, besonders ein Einsatz in Windrotorblättern, im Boots- und Fahrzeugbau, sowie eine Anwendung als Konstruktionswerkstoff, insbesondere in Verbindung mit der Verwendung von Epoxy- oder Polyesterharzen in Frage.

Demgemäß betrifft die vorliegende Erfindung auch die Verwendung eines Hartschaums erhältlich oder erhalten nach einem erfindungsgemäßen Verfahren oder eines erfindungsgemäßen Hartschaums zur Herstellung von Dämmmaterialien, Vakuumisolationspaneelen, Kühlgeräten, Bauelementen, Windrotorblättern oder Elementen für den Boots- und Fahrzeugbau.

Weitere Ausführungsformen der vorliegenden Erfindung sind den Ansprüchen und den Beispielen zu entnehmen. Es versteht sich, dass die vorstehend genannten und die nachstehend erläuterten Merkmale des erfindungsgemäßen Gegenstandes/Verfahren/Verwendungen nicht nur in der jeweils angegebenen Kombination, sondern auch in anderen Kombinationen verwendbar sind, ohne den Rahmen der Erfindung zu verlassen. So ist z. B. auch die Kombination von einem bevorzugten Merkmal mit einem besonders bevorzugten Merkmal, oder eines nicht weiter charakterisierten Merkmals mit einem besonders bevorzugten Merkmal etc. implizit umfasst auch wenn diese Kombination nicht ausdrücklich erwähnt wird

Die nachfolgenden Beispiele dienen der Veranschaulichung der Erfindung, sind aber in keiner Weise einschränkend hinsichtlich des Gegenstands der vorliegenden Erfindung.

### BEISPIELE

Folgende Einsatzstoffe wurden eingesetzt:
- Polyol 1: Glycerin gestartetes Polypropylenglykol mit einem mittlerem Molekulargewicht (MW) von 420 g/mol und einer Funktionalität von ca. 2,99
- Polyol 2: Saccharose / Glycerin gestartetes Polypropylenglykol mit einem mittlerem Molekulargewicht (MW) von 500 g/mol und einer Funktionalität von ca. 4,34
- Polyol 3: TMP gestartetes Polypropylenglykol mit einem mittlerem Molekulargewicht (MW) von 1040 g/mol und einer Funktionalität von ca. 2,96
- Polyol 4: Propylenglykol gestartetes Polypropylenglykol mit einem mittlerem Molekulargewicht (MW) von 1070 g/mol und einer Funktionalität von ca. 1,99
- Stabi 1: Polyether-Polydimethylsiloxan
- Stabi 2: Silikon-Glycol-Copolymer
- Epoxid: Epoxidmischung auf Basis von Bisphenol-A-Epoxiden und Reaktivverdünnern
- Kat 1: N,N-Dimethylcyclohexylamin
- Kat 2: 1-Methylimidazol
- Kat 3: N-Methyl-N-(Dimethylaminomethyl)-Piperazin
- Kat 4: Pentamethyldiethylentriamin
- Kat 5: 1,8-Diazabicyclo-5,4,0-undecen-7
- Isocyanat: Polymer-MDI mit einen NCO-Gehalt 31,5 %

### 1. Herstellbeispiel

Die Rezepturbestandteile wurden gemäß Anteile in Tabelle 1 mit Ausnahme des Isocyanats zusammen eingewogen und homogenisiert. 238,1 g dieser A-Komponente wurden mit einem Laborstandmischer 10s lang intensiv mit 301,9 g Isocyanat verrührt. Anschließend wurde dieser Ansatz in eine 11 I-Metallform gegossen und diese mit einem Deckel verschlossen. Nach einer Aushärtezeit von größer 5min kann der Schaumwürfel mit einer Kantenlänge von 22,2 x 22,2 x 22,2 cm entnommen werden.

Eine Ausnahme stellt Beispiel 4 dar. Dieser Würfel wurde 13 min nach dem Einfüllen in die Form in einem 90 ° C Heizschrank gestellt und zur Nachaushärtung 16h in diesem gelassen.

Vergleichsbeispiele sind als "Vgl" gekennzeichnet.

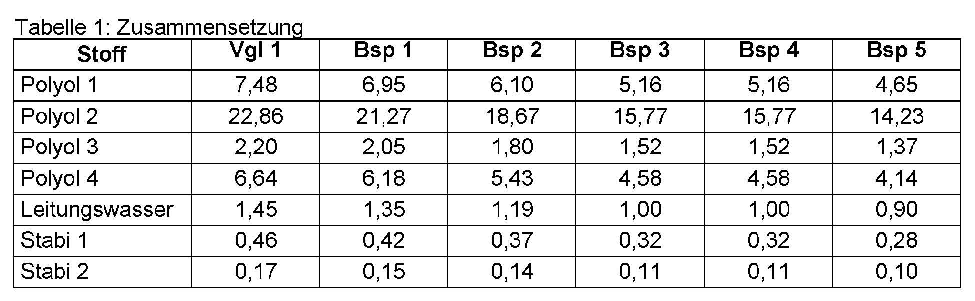

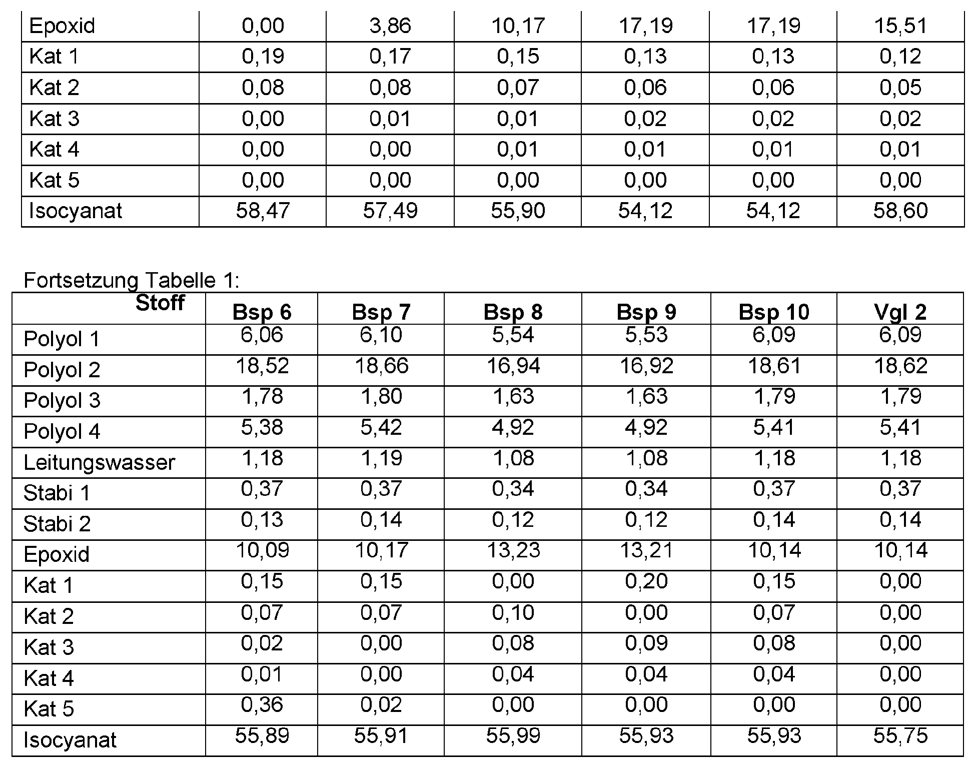

### 2. Eigenschaften der Schäume

An allen hergestellten Hartschaumwürfeln wurden die physikalischen Eigenschaften geprüft, wie sie in Tabelle 2 aufgeführt sind.

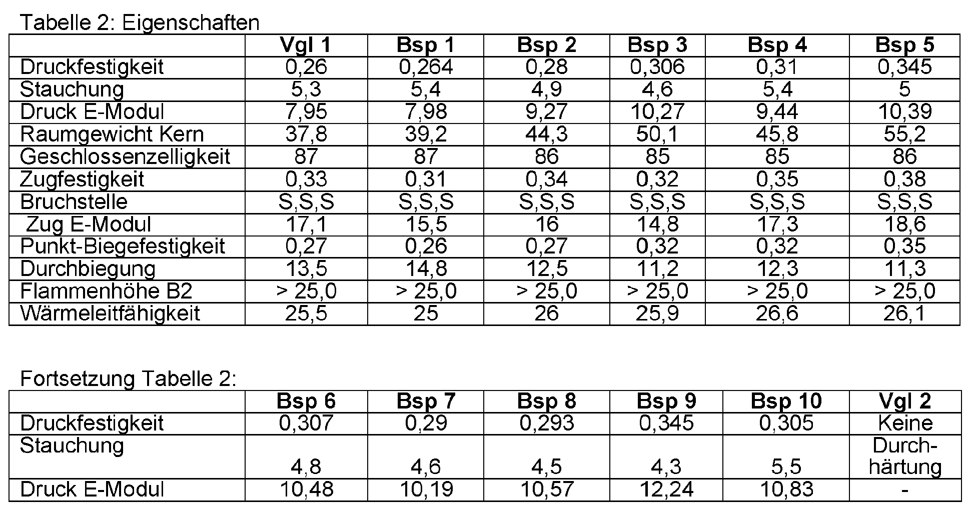

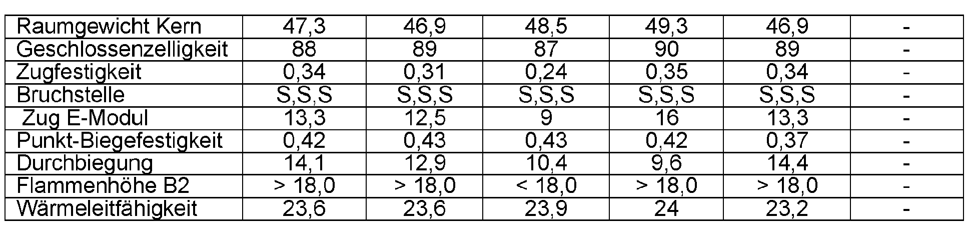

Die erfindungsgemäßen Schäume zeigen Vorteile in der Druckfestigkeit, dem Druck E-Modul und der Punktbiegefestigkeit.

### 3. Prüfvorschriften

Die Eigenschaften der Proben wurden gemäß den folgenden Prüfvorschriften bestimmt:
Druckfestigkeit in N/mm² gemäß DIN 53421 / DIN EN ISO 604
Stauchung in % gemäß DIN 53421 / DIN EN ISO 604
Druck E-Modul in N/mm² gemäß DIN 53421 / DIN EN ISO 604
Raumgewicht Kern in kg/m³
Geschlossenzelligkeit in % gemäß DIN ISO 4590
Zugfestigkeit in N/mm² gemäß DIN 53292 / DIN EN ISO 527-1
Bruchstelle gemäß DIN 53292 / DIN EN ISO 527-1
Zug E-Modul in N/mm² gemäß DIN 53292 / DIN EN ISO 527-1
3-Punktbiegefestigkeit in N/mm² gemäß DIN 53423
Durchbiegung in mm gemäß DIN 53423
Flammhöhe in cm gemäß DIN 4102 B2
Wärmeleitfähigkeit in mW/mK gemäß Hesto A50

## Patentansprüche

1. Verfahren zur Herstellung eines Hartschaums umfassend die Umsetzung mindestens eines Polyisocyanats mit einer Mischung enthaltend mindestens ein Polyepoxid, Wasser und mindestens eine weitere wasserstoffazide Verbindung, wobei die Umsetzung in Gegenwart einer metallfreien Lewisbase mit mindestens einem Stickstoffatom erfolgt,
wobei der Katalysator ausgewählt ist aus der Gruppe bestehend aus 1,8-Diazabicyclo-5,4,0-undec-7-en, N-Methyl-N'-(dimethylaminomethyl)-Piperazin, Pentamethyl-Diethylentriamin, Methylimidazol und deren Mischungen und Derivaten davon.

2. Verfahren gemäß Anspruch 1, wobei die mindestens eine weitere wasserstoffazide Verbindung ausgewählt ist aus der Gruppe bestehend aus Polyolen und Polyaminen.

3. Verfahren gemäß einem der Ansprüche 1 oder 2, wobei das Polyepoxid in einer Menge im Bereich von 5 bis 70 Gew.-%, bezogen auf die Summe des eingesetzten Polyepoxids und der mindestens einen weiteren wasserstoffaziden Verbindung, eingesetzt wird.

4. Verfahren gemäß einem der Ansprüche 1 bis 3, wobei der Katalysator ausgewählt ist aus der Gruppe bestehend aus 1,8-Diazabicyclo-5,4,0-undec-7-en und Derivaten davon.

5. Verfahren gemäß einem der Ansprüche 1 bis 4, wobei der Katalysator in einer Menge im Bereich von 0,01 bis 2 Gew.-% bezogen auf die Summe des eingesetzten Polyisocyanats und der Mischung enthaltend mindestens ein Polyepoxid, Wasser und mindestens eine weitere wasserstoffazide Verbindung eingesetzt wird.

6. Verfahren gemäß einem der Ansprüche 1 bis 5, wobei die Reaktion des mindestens einen Polyisocyanats mit einer Mischung enthaltend mindestens ein Polyepoxid, Wasser und mindestens eine weitere wasserstoffazide Verbindung bei einer Temperatur < 100 °C gestartet wird.

7. Verfahren gemäß einem der Ansprüche 1 bis 6, wobei die mindestens eine weitere wasserstoffazide Verbindung ausgewählt ist aus der Gruppe bestehend aus Polyetherpolyolen, Polyesterpolyolen, Polycarbonatpolyolen oder Polyaminen.

8. Verfahren gemäß einem der Ansprüche 1 bis 7, wobei das mindestens eine Polyepoxid ausgewählt ist aus der Gruppe bestehend aus Bisphenol-A-Epoxiden, Bisphenol-F-Epoxiden, Derivaten davon, aliphatischen Di- oder Tri-Epoxiden und Mischungen aus zwei oder mehr davon.

9. Verfahren gemäß einem der Ansprüche 1 bis 8, wobei das mindestens eine Polyisocyanat ausgewählt ist aus der Gruppe bestehend aus aromatischen, araliphatischen und aliphatischen Polyisocyanaten.

10. Verfahren gemäß einem der Ansprüche 1 bis 8, wobei das mindestens eine Polyisocyanat ein Prepolymer mit einem NCO-Gehalt von 6 bis 30 % ist.

11. Hartschaum, erhältlich oder erhalten durch ein Verfahren umfassend die Umsetzung mindestens eines Polyisocyanats mit einer Mischung enthaltend mindestens ein Polyepoxid, Wasser und mindestens eine weitere wasserstoffazide Verbindung, wobei die Umsetzung in Gegenwart einer metallfreien Lewisbase mit mindestens einem Stickstoffatom erfolgt,
wobei der Katalysator ausgewählt ist aus der Gruppe bestehend aus 1,8-Diazabicyclo-5,4,0-undec-7-en, N-Methyl-N'-(dimethylaminomethyl)-Piperazin, Pentamethyl-Diethylentriamin, Methylimidazol und deren Mischungen und Derivaten davon.

12. Hartschaum gemäß Anspruch 11, wobei das Polyepoxid in einer Menge im Bereich von 5 bis 70 Gew.-%, bezogen auf die Summe des eingesetzten Polyepoxids und der mindestens einen weiteren wasserstoffaziden Verbindung, eingesetzt wird.

13. Hartschaum gemäß Anspruch 11 oder 12, wobei das mindestens eine Polyepoxid ausgewählt ist aus der Gruppe bestehend aus Bisphenol-A-Epoxiden, Bisphenol-F-Epoxiden, Derivaten davon, aliphatischen Di- oder Tri-Epoxiden und Mischungen aus zwei oder mehr davon.

14. Hartschaum gemäß einem der Ansprüche 11 bis 13, wobei das mindestens eine Polyisocyanat ausgewählt ist aus der Gruppe bestehend aus aromatischen, araliphatischen und aliphatischen Polyisocyanaten.

15. Verwendung eines Hartschaums erhältlich oder erhalten nach einem Verfahren gemäß einem der Ansprüche 1 bis 10 oder eines Hartschaums gemäß einem der Ansprüche 11 bis 14 zur Herstellung von Dämmmaterialien, Vakuumisolationspaneelen, Kühlgeräten, Bauelementen, Windrotorblättern oder Elementen für den Boots- und Fahrzeugbau.

## Claims

1. A method for producing a rigid foam, which comprises reacting at least one polyisocyanate with a mixture comprising at least one polyepoxide, water, and at least one other hydrogen-acidic compound, the reaction taking place in the presence of a metal-free Lewis base having at least one nitrogen atom,
the catalyst being selected from the group consisting of 1,8-diazabicyclo[5.4.0]undec-7-ene, N-methyl-N'-(dimethylaminomethyl)-piperazine, pentamethyldiethylenetriamine, methylimidazole, and mixtures and derivatives thereof.

2. The method according to claim 1, the at least one other hydrogen-acidic compound being selected from the group consisting of polyols and polyamines.

3. The method according to either of claims 1 and 2, the polyepoxide being used in an amount in the range from 5 to 70 wt%, based on the sum of the polyepoxide and the at least one other hydrogen-acidic compound used.

4. The method according to any of claims 1 to 3, the catalyst being selected from the group consisting of 1,8-diazabicyclo[5.4.0]undec-7-ene and derivatives thereof.

5. The method according to any of claims 1 to 4, the catalyst being used in an amount in the range from 0.01 to 2 wt%, based on the sum of the polyisocyanate and of the mixture comprising at least one polyepoxide, water, and at least one other hydrogen-acidic compound used.

6. The method according to any of claims 1 to 5, the reaction of the at least one polyisocyanate with a mixture comprising at least one polyepoxide, water, and at least one other hydrogen-acidic compound being started at a temperature of < 100°C.

7. The method according to any of claims 1 to 6, the at least one other hydrogen-acidic compound being selected from the group consisting of polyether polyols, polyester polyols, polycarbonate polyols, or polyamines.

8. The method according to any of claims 1 to 7, the at least one polyepoxide being selected from the group consisting of bisphenol A epoxides, bisphenol F epoxides, derivatives thereof, aliphatic di- or tri-epoxides, and mixtures of two or more thereof.

9. The method according to any of claims 1 to 8, the at least one polyisocyanate being selected from the group consisting of aromatic, araliphatic, and aliphatic polyisocyanates.

10. The method according to any of claims 1 to 8, the at least one polyisocyanate being a prepolymer having an NCO content of 6% to 30%.

11. A rigid foam obtainable or obtained by a method comprising reacting at least one polyisocyanate with a mixture comprising at least one polyepoxide, water, and at least one other hydrogen-acidic compound, the reaction taking place in the presence of a metal-free Lewis base having at least one nitrogen atom, the catalyst being selected from the group consisting of 1,8-diazabicyclo[5.4.0]undec-7-ene, N-methyl-N'-(dimethylaminomethyl)-piperazine, pentamethyldiethylenetriamine, methylimidazole, and mixtures and derivatives thereof.

12. The rigid foam according to claim 11, the polyepoxide being used in an amount in the range from 5 to 70 wt%, based on the sum of the polyepoxide and the at least one other hydrogen-acidic compound used.

13. The rigid foam according to claim 11 or 12, the at least one polyepoxide being selected from the group consisting of bisphenol A epoxides, bisphenol F epoxides, derivatives thereof, aliphatic di- or tri-epoxides, and mixtures of two or more thereof.

14. The rigid foam according to any of claims 11 to 13, the at least one polyisocyanate being selected from the group consisting of aromatic, araliphatic, and aliphatic polyisocyanates.

15. The use of a rigid foam obtainable or obtained by a method according to any of claims 1 to 10, or of a rigid foam according to any of claims 11 to 14, for producing insulating materials, vacuum insulation panels, refrigeration equipment, construction elements, wind rotor blades, or elements for boatbuilding and vehicle construction.

## Revendications

1. Procédé pour la préparation d'une mousse dure comprenant la transformation d'au moins un polyisocyanate avec un mélange contenant au moins un polyépoxyde, de l'eau et au moins un composé supplémentaire à hydrogène acide, la transformation ayant lieu en présence d'une base de Lewis exempte de métal comportant au moins un atome d'azote, le catalyseur étant choisi dans le groupe constitué par le 1,8-diazabicyclo[5.4.0]undéc-7-ène, la N-méthyl-N'-(diméthylaminométhyl)-pipérazine, la pentaméthyl-diéthylènetriamine, le méthylimidazole et leurs mélanges et leurs dérivés correspondants.

2. Procédé selon la revendication 1, l'au moins un composé supplémentaire à hydrogène acide étant choisi dans le groupe constitué par les polyols et les polyamines.

3. Procédé selon l'une quelconque des revendications 1 et 2, le polyépoxyde étant utilisé en une quantité dans la plage de 5 à 70 % en poids, par rapport à la somme du polyépoxyde utilisé et de l'au moins un composé supplémentaire à hydrogène acide.

4. Procédé selon l'une quelconque des revendications 1 à 3, le catalyseur étant choisi dans le groupe constitué par le 1,8-diazabicyclo[5.4.0]undéc-7-ène et des dérivés de ceux-ci.

5. Procédé selon l'une quelconque des revendications 1 à 4, le catalyseur étant utilisé en une quantité dans la plage de 0,01 à 2 % en poids par rapport à la somme du polyisocyanate utilisé et du mélange contenant au moins un polyépoxyde, de l'eau et au moins un composé supplémentaire à hydrogène acide.

6. Procédé selon l'une quelconque des revendications 1 à 5, la réaction de l'au moins un polyisocyanate avec un mélange contenant au moins un polyépoxyde, de l'eau et au moins un composé supplémentaire à hydrogène acide étant commencée à une température < 100 °C.

7. Procédé selon l'une quelconque des revendications 1 à 6, l'au moins un composé supplémentaire à hydrogène acide étant choisi dans le groupe constitué par les polyéther polyols, les polyester polyols, les polycarbonates polyols et les polyamines.

8. Procédé selon l'une quelconque des revendications 1 à 7, l'au moins un polyépoxyde étant choisi dans le groupe constitué par les époxydes de bisphénol A, les époxydes de bisphénol F, des dérivés de ceux-ci, des diépoxydes ou triépoxydes aliphatiques et des mélanges de deux ou plus de ceux-ci.

9. Procédé selon l'une quelconque des revendications 1 à 8, l'au moins un polyisocyanate étant choisi dans le groupe constitué par les polyisocyanates aromatiques, araliphatiques et aliphatiques.

10. Procédé selon l'une quelconque des revendications 1 à 8, l'au moins un polyisocyanate étant un prépolymère comportant une teneur en NCO de 6 à 30 % .

11. Mousse dure, pouvant être obtenue ou obtenue par un procédé comprenant la transformation d'au moins un polyisocyanate avec un mélange contenant au moins un polyépoxyde, de l'eau et au moins un composé supplémentaire à hydrogène acide, la transformation ayant lieu en présence d'une base de Lewis exempte de métal comportant au moins un atome d'azote, le catalyseur étant choisi dans le groupe constitué par le 1,8-diazabicyclo[5.4.0]undéc-7-ène, la N-méthyl-N'-(diméthylaminométhyl)-pipérazine, la pentaméthyl-diéthylènetriamine, le méthylimidazole et leurs mélanges et leurs dérivés correspondants.

12. Mousse dure selon la revendication 11, le polyépoxyde étant utilisé en une quantité dans la plage de 5 à 70 % en poids, par rapport à la somme du polyépoxyde utilisé et de l'au moins un composé supplémentaire à hydrogène acide.

13. Mousse dure selon la revendication 11 ou 12, l'au moins un polyépoxyde étant choisi dans le groupe constitué par les époxydes de bisphénol A, les époxydes de bisphénol F, des dérivés de ceux-ci, des diépoxydes ou triépoxydes aliphatiques et des mélanges de deux ou plus de ceux-ci.

14. Mousse dure selon l'une quelconque des revendications 11 à 13, l'au moins un polyisocyanate étant choisi dans le groupe constitué par les polyisocyanates aromatiques, araliphatiques et aliphatiques.

15. Utilisation d'une mousse dure pouvant être obtenue ou obtenue par un procédé selon l'une quelconque des revendications 1 à 10 ou d'une mousse dure selon l'une quelconque des revendications 11 à 14 pour la préparation de matériaux d'amortissement, de panneaux à isolation sous vide, d'appareils de refroidissement, d'éléments de construction, de pales de rotor d'éolienne ou d'éléments pour la construction navale et automobile.
